# EUROPÄISCHE PATENTANMELDUNG

(11) **EP 0 774 816 A2**
(43) Veröffentlichungstag der Anmeldung: **21.05.1997**
(21) Anmeldenummer: 96810747.4
(22) Anmeldetag: 07.11.1996
(51) Int. Cl.: H02G 5/06

(54) **Gasisolierte Leitung**

(30) Priorität: 15.11.1995 DE 19542478
(71) Anmelder: ASEA BROWN BOVERI AG, 5400 Baden (CH)
(72) Erfinder: Moritz, Bertil, 72348 Västeras (SE); Russberg, Gunnar, 72214 Västeras (SE)
(74) Vertreter: Kaiser, Helmut, Dr.

(57) **Zusammenfassung**

Die gasisolierte Leitung (1) weist einen zylindersymmetrisch ausgebildeten, hochspannungsführenden Stromleiter (4), ein isoliergasgefülltes Druckrohr (3) und einen den Stromleiter (4) im Druckrohr (3) zentrisch haltenden Stützisolator (2) auf. Der Stützisolator (2) ist von mindestens einem axial geführten oder schraubenlinienförmig gewundenen Isolierrohr (5") gebildet, welches mit einem Teil seiner Mantelfläche auf der Innenfläche des Druckrohrs (3) und mit einem anderen Teil seiner Mantelfläche auf der Mantelfläche des Stromleiters (4) aufliegt.

Eine solche gasisolierte Leitung ist einfach zu fertigen und weist im Bereich des Tripelpunktes relativ geringe Spitzen des bei Betrieb der gasisolierten Leitung (1) herrschenden elektrischen Feldes auf.

## Beschreibung

### TECHNISCHES GEBIET

Bei der Erfindung wird ausgegangen von einer gasisolierten Leitung mit einem im wesentlichen zylindersymmetrisch ausgebildeten, hochspannungsführenden Stromleiter, einem isoliergasgefüllten Druckrohr und mit einem den Stromleiter im Druckrohr zentrisch haltenden Stützisolator mit mindestens einem in axialer Richtung über einen gegenüber dem Rohrdurchmesser grossen Abschnitt der Leitung erstreckten, auf der Mantelfläche des Stromleiters aufliegenden ersten Isolierkörper.

### STAND DER TECHNIK

Eine gasisolierte Leitung der eingangs genannten Art ist beispielsweise in US-A-4,705,914 beschrieben. Die gasisolierte Leitung ist als flexibles Kabel ausgebildet und weist einen gasdichten, zylindersymmetrischen Mantel aus gewelltem Blech und darauf aufgebrachtem Isolierstoff auf. Dieser Mantel ist mit einem Isoliergas, wie etwa SF₆, von geringem Druck gefüllt. Zentral im Mantel geführt ist ein hochspannungsführender Stromleiter, welcher eine aus gewelltem Blech bestehende Hülle und in der Hülle geführte Drähte aufweist. Der Stromleiter wird durch einen Stützisolator im Kabelmantel fixiert. Der Stützisolator ist von mehreren axial ausgerichteten, rohrförmigen Isolierkörpern gebildet, die in Umfangsrichtung um den Stromleiter verteilt angeordnet sind. Die Stützisolatoren weisen jeweils trapezförmigen Querschnitt auf und sind mit den kleineren Trapezseiten jeweils auf der Blechhülle des Stromleiters und mit den grösseren Trapezseiten jeweils auf der Innenseite des Kabelmantels gelagert. In Umfangsrichtung benachbarte Isolierkörper stützen sich gegeneinander mit ihren von den Trapezschenkeln gebildeten Seiten ab. Eine derartig ausgebildete gasisolierte Leitung zeichnet sich vor allem dadurch aus, dass der Stromleiter bedingt durch seine Ausbildung und bedingt durch die Ausbildung der Isolierkörper in Leitungskrümmungen und bei starker Erwärmung stets zentral im Kabelmantel geführt ist.

### KURZE DARSTELLUNG DER ERFINDUNG

Der Erfindung, wie sie in Patentanspruch 1 angegeben ist, liegt die Aufgabe zugrunde, eine gasisolierte Leitung zu schaffen, welche in einfacher und wirtschaftlicher Weise hergestellt werden kann und welche sich zugleich durch günstige elektrische Eigenschaften auszeichnet.

Ein grosser Leitungabschnitt der gasisolierte Leitung nach der Erfindung kann durch Zusammenstecken von Stromleiter, Rohr und eines oder mehrerer Isolierkörper zu einem Montagekörper, gasdichtes Verschliessen dieses Montagekörpers und Füllen des verschlossenen Montagekörpers mit Isoliergas rasch und ohne grossen Montageaufwand gefertigt werden. Durch geeignete Ausbildung des oder der Isolierkörper werden zugleich unerwünschte Spitzen des elektrischen Feldes, welche im Bereich eines durch den Stromleiter, den Stützisolator und das Isoliergas bestimmten Tripelpunktes auftreten, ganz erheblich reduziert.

Von besonderem Vorteil ist es, dass der Stromleiter auf seiner Mantelfläche frei von Nuten, wie sie etwa bei konventionellen gasisolierte Leitungen zur Fixierung von Stützisolatoren vorgesehen sind, oder anderen Vertiefungen ist, wie etwa von einer gewellt ausgebildeten und bei Kabeln zur Erhöhung der Flexibilität vorgesehenen Oberfläche.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine Aufsicht auf einen radial geführten Schnitt durch eine erste Ausführungsform der gasisolierten Leitung nach der Erfindung,
- Fig.2: eine Seitenansicht eines Abschnitts einer zweiten Ausführungsform der gasisolierten Leitung nach der Erfindung nach dem Entfernen eines dem Betrachter zugewandten Teils eines Mantelrohrs der Leitung,
- Fig.3: eine Seitenansicht eines Endabschnitts eines Isolierrohrs, welches bei der Herstellung eines in den Ausführungsformen der gasisolierten Leitung nach den Figuren 1 und 2 vorgesehenen Stützisolators verwendet wird,
- Fig.4: eine Seitensicht des Endabschnitt gemäss Fig.3 nach dem Verschliessen des Rohres,
- Fig.5: eine in Richtung der Achse des Isolierrohrs geführte Aufsicht auf den Endabschnitt gemäss Fig.4,
- Fig.6: eine Aufsicht auf einen radial geführten Schnitt durch einen Teil der Ausführungsform der gasisolierten Leitung gemäss Fig.1 mit einem kreisförmigen Querschnitt aufweisenden Isolierrohr, bei der die Äquipotentialflächen des bei Betrieb der gasisolierten Leitung herrschenden elektrischen Feldes dargestellt sind,
- Fig.7: ein Diagramm, in dem die auf der Mantelfläche des Isolierrohrs gemäss Fig.6 auftretende elektrische Feldstärke E in Abhängigkeit von Abstand s zwischen einem zentralen Auflagepunkt des Isolierrohrs auf einem hochspannungsführenden Stromleiter und einem auf der Mantelfläche des Isolierrohrs gelegenen Messpunkt dargestellt ist,
- Fig.8: eine Aufsicht auf einen radial geführten Schnitt durch einen Teil einer Ausführungsform einer gasisolierte Leitung nach dem Stand der Technik mit einem trapezförmigen Querschnitt aufweisenden Isolierrohr, bei der die Äquipotentialflächen des bei Betrieb der gasisolierten Leitung herrschenden elektrischen Feldes dargestellt sind, und
- Fig.9: ein Diagramm, in dem die auf der Mantelfläche des Isolierrohrs gemäss Fig.8 herrschende elektrische Feldstärke E in Abhängigkeit von Abstand s zwischen einem zentralen Auflagepunkt des Isolierrohrs auf einem hochspannungsführenden Stromleiter und einem auf der Manteloberfläche des Isolierrohrs gelegenen Messpunkt dargestellt ist.

### WEGE ZUR AUSFÜHRUNG DER ERFINDUNG

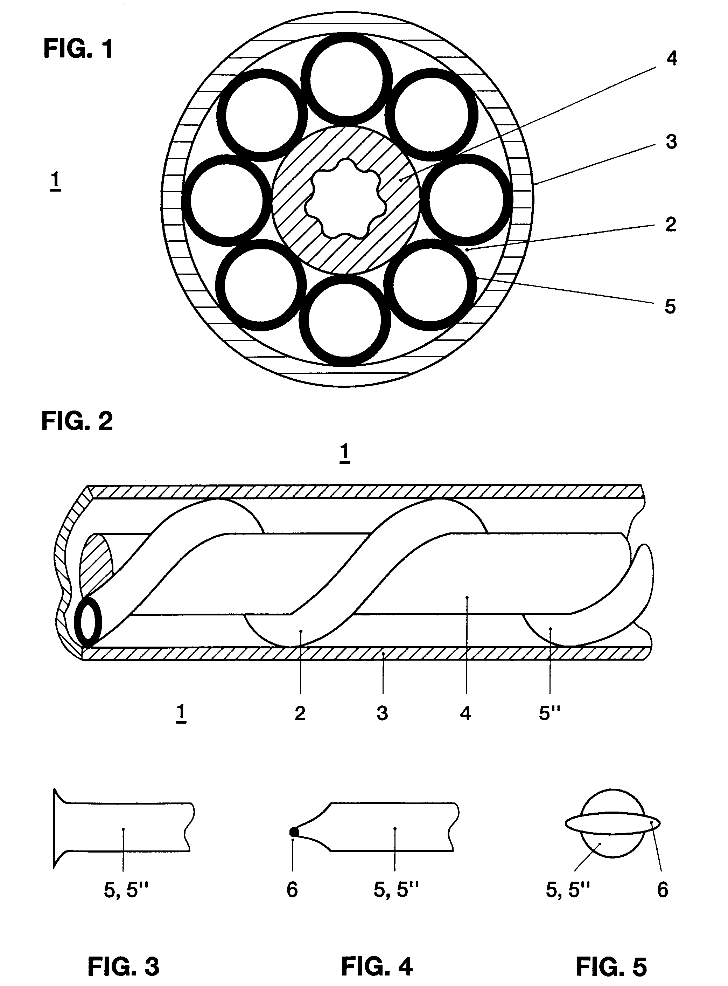

In allen Figuren beziehen sich gleiche Bezugszeichen auf gleichwirkende Teile. Eine in Fig.1 dargestellte und mit dem Bezugszeichen 1 gekennzeichnete gasisolierte Leitung weist einen auf einem Stützisolator 2 in einem starren Druckrohr 3 zentral gelagerten und vorzugsweise hohl ausgebildeten, zylinderförmigen Stromleiter 4 auf. Das Druckrohr 3 ist mit einem Isoliergas, wie etwa SF₆, mit bis zu einigen bar Druck gefüllt und kann aus Metall, wie etwa Aluminium oder Stahl, oder aus gegebenenfalls leitfähig beschichtetem Kunststoff, wie etwa Polyäthylen, bestehen. Der vom Rohr 3 umschlossene Gasraum kann in einfacher Weise mit einem Drucksensor auf Dichtigkeit überwacht werden. Das Isoliergas kann als Kühlmittel durch das Rohr 3 und gegebenenfalls auch durch den Stromleiter 4 zirkulieren.

Der Stützisolator 2 ist von 8 in axialer Richtung erstreckten und im Umfangsrichtung um den Stromleiter angeordneten Isolierrohren 5 gleicher Abmessungen gebildet. Diese Isolierrohre sind mit Vorteil von einem Polymer, wie insbesondere einem Thermoplast etwa auf der Basis von Polyäthylen, gebildet. In der dargestellten Schnittfläche weisen diese Isolierrohre 5 jeweils kreisförmigen Querschnitt auf. Mit dem den Querschnitt bestimmenden Kreis liegen sie jeweils auf der Mantelfläche des Stromleiters 4 und der Innenfläche des Druckrohrs 3 auf.

Bei einem durch die Dauerstromtragfähigkeit der gasisolierten Leitung 1 vorgebenenen Aussendurchmesser des Stromleiters 4 und einem durch den Isolationsabstand zwischen Stromleiter 4 und Rohr 3 vorgegebenen minimalen Innendurchmesser des Druckrohrs 3 sind die Aussendurchmesser der Isolierrohre 5 derart gewählt, dass die Mantelflächen benachbarter Isolierrohre 5 einander berühren. Eine solche Anordnung lässt sich im allgemeinen ohne wesentliche Vergrösserung des durch den Isolationsabstand vorgegebenen minimalen Innendurchmessers des Druckrohrs 3 mit einer zwischen 8 und 20 betragenden Anzahl an Isolierrohren 5 erreichen.

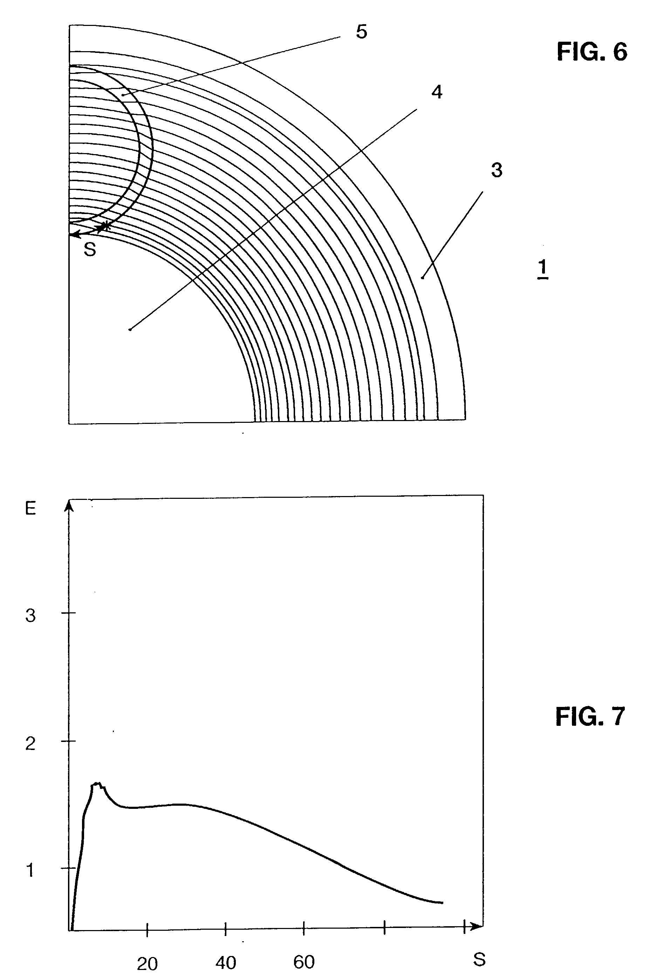

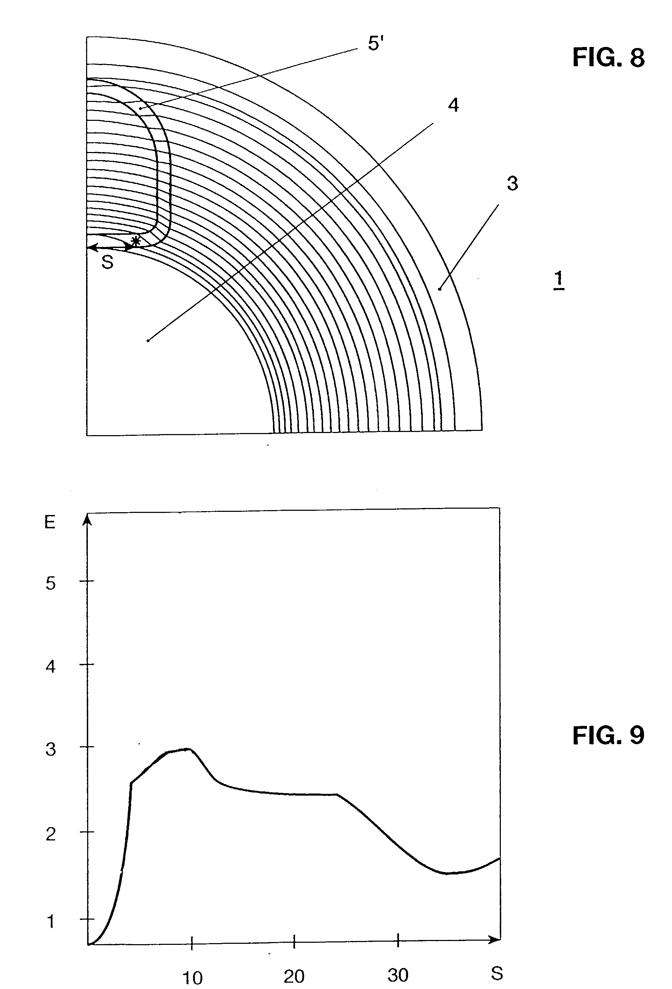

Untersuchungen der Grösse der elektrischen Feldstärke in dielektrisch kritischen Bereichen, wie insbesondere der Oberfläche eines der Isolierrohre 5 in der Nähe des Stromleiters 4, haben gezeigt, dass beim Betrieb der gasisolierten Leitung gemäss Fig.1 auftretende Feldstärkespitzen wesentlich geringer ausfallen als bei einer gasisolierten Leitung nach dem Stand der Technik mit mindestens einem Isolierrohr von trapezförmigem Querschnitt. Dies ist aus den Figuren 6 bis 9 ersichtlich. Aus diesen Figuren geht hervor, dass die bevorzugt am Tripelpunkt (Punkt, welcher Stromleiter 4, Isolierrohr 5 und Isoliergas gemeinsam ist) auftretenden Spitzen der elektrischen Feldstärke bei der gasisolierten Leitung gemäss Fig.1 mit mindestens einem Isolierrohr 5 von kreisförmigem Querschnitt lediglich 60 - 70 % der Feldstärkespitzen der gasisolierten Leitung nach dem Stand der Technik mit mindestens einem Isolierrohr 5' von trapezförmigem Querschnitt beträgt.

Bei der Ausführungsform der gasisolierten Leitung gemäss Fig.2 ist der Stützisolator 2 von einem schraubenförmig um den Stromleiter 4 gewundenen und mit Vorteil als Isolierrohr 5'' ausgebildeten Isolierkörper gebildet. Das Isolierrohr 5'' ist mit dem radial nach aussen weisenden Teil seiner Mantelfläche auf der Innenseite des Druckrohrs 3 gelagert und hält mit dem radial nach innen weisenden Teil seiner Mantelfläche den Stromleiter 4 zentrisch im Druckrohr 3. Axial kann der Stromleiter 4 durch zwei nicht dargestellte Schottungsisolatoren fixiert werden, welche einen definierten - beispielsweise mehrere hundert Meter langen - Abschnitt des Druckrohrs 3 begrenzen, in dem das Isoliergas eingeschlossen ist.

Die Enden der Abschnitte sind für Montagepersonal zugänglich und können Mittel enthalten, welche die Zirkulation des Isoliergases im Leitungsabschnitt fördern. Eine solche Zirkulation ist vorteilhaft für die Kühlung des Stromleiters 4 und für den Transport von unerwünschter Feuchtigkeit an die Abschnittsenden, wo sie etwa durch Adsorption oder Kondensation leicht entfernt werden kann. Durch die schraubenlinienförmige Ausbildung des Isolierrohrs 5'' wird die Zirkulation des Isoliergases begünstigt und wird durch die damit ermöglichte Abscheidung von Feuchtigkeit sowie gegebenenfalls vorhandener weiterer unerwünschter Verunreinigungen an den Abschnittsenden eine besonders grosse Betriebssicherheit der gasisolierten Leitung 1 erreicht. Zugleich belastet das Isolierrohr 5'' sowohl mit einer axialen als auch mit einer radialen Kraftkomponente die Innenfläche des Druckrohrs 3, wodurch eine auf das Druckrohr übertragene Kraft vergleichmässigt und ein Ausbeulen des Druckrohrs 3, wie dies beispielsweise bei einem nur axial geführten Isolierrohr möglich ist, weitgehend vermieden wird. Durch Änderung des Steigungswinkels der Schraubenlinie des Isolierrohrs 5'' und/oder durch Verwendung eines weiteren Isolierrohrs oder mehrerer weiterer Isolierrohre kann die mechanische Festigkeit des Stützisolators 2 und damit die Betriebssicherheit der gasisolierten Leitung 1 optimiert werden.

Das schraubenlinienförmig gewundene Isolierrohr 5'' weist in einer durch einen radial geführten Schnitt erzeugten Ebene einen elliptischen Querschnitt auf und liegt mit einem Abschnitt des schwächer gekrümmten Teils der den Querschnitt bestimmenden Ellipse auf dem Stromleiter 4 auf. Dielektrisch verhält sich ein solches Isolierrohr 5'' am Tripelpunkt wie das parallel zum Druckrohr 3 angeordnete Isolierrohr 5, d.h. es werden auch bei dieser Ausführungsform der gasisolierten Leitung nach der Erfindung übermässige Erhöhungen der bei Betrieb der gasisolierten Leitung 1 herrschenden elektrischen Feldstärke vermieden.

In den Figuren 3 bis 5 ist das Ende des in den Ausführungsformen nach den Figuren 1 und 2 verwendeten Isolierrohrs 5 bzw 5'' dargestellt. Das zunächst offene Ende dieses Isolierrohrs (Fig.3) wird durch Heissverformung abgeflacht, wobei sich eine Abschlussnaht 6 bildet (Figuren 4 und 5). Die an beiden Enden des Isolierrohrs 5 bzw. 5'' vorgesehenen Abschlussnähte 6 werden so eingeformt, dass sie jeweils in wesentlichen parallel zu einer Potentialfläche des im Gasraum zwischen Stromleiter 4 und Druckrohr 3 herrschenden elektrischen Feldes liegen. Hierdurch werden übermässige Feldverzerrungen an den Enden des Isolierrohrs 5 bzw. 5'' vermieden.

### Bezugszeichenliste

- 1: gasisolierte Leitung
- 2: Stützisolator
- 3: Druckrohr
- 4: Stromleiter
- 5, 5', 5'': Isolierrohre
- 6: Abschlussnaht

## Patentansprüche

1. Gasisolierte Leitung (1) mit einem im wesentlichen zylindersymmetrisch ausgebildeten, hochspannungsführenden Stromleiter (4), einem isoliergasgefüllten Druckrohr (3) und mit einem den Stromleiter (4) im Druckrohr (3) zentrisch haltenden Stützisolator (2) mit mindestens einem in axialer Richtung über einen gegenüber dem Rohrdurchmesser grossen Abschnitt der Leitung erstreckten, auf der Mantelfläche des Stromleiters (4) aufliegenden ersten Isolierkörper, dadurch gekennzeichnet, dass der erste Isolierkörper derart ausgebildet ist, dass er bei einem radial durch die gasisolierte Leitung (1) geführten Schnitt im wesentlichen kreis- oder ellipsenförmigen Querschnitt aufweist und in der Schnittfläche mit einem Abschnitt des den Querschnitt bestimmenden Kreises oder mit einem Abschnitt des schwächer gekrümmten Teils der den Querschnitt bestimmenden Ellipse auf dem Stromleiter (4) aufliegt.

2. Gasisolierte Leitung (1) nach Anspruch 1, dadurch gekennzeichnet, dass der erste Isolierkörper als Isolierrohr (5) ausgebildet und parallel zur Achse des Druckrohrs (3) geführt ist.

3. Gasisolierte Leitung (1) nach Anspruch 2, dadurch gekennzeichnet, dass als Isolierrohre (5) ausgebildete zweite Isolierkörper vorgesehen sind mit dem Aussendurchmesser des ersten Isolierrohrs (5) entsprechenden Aussendurchmessern, und dass bei einem durch die Stromtragfähigkeit des Stromleiters (4) vorgebenenen Aussendurchmesser des Stromleiters (4) und einem durch den Isolationsabstand vorgebenen minimalen Innendurchmesser des Druckrohrs (3) der Innendurchmesser des Druckrohrs (3) und die Aussendurchmesser der Isolierrohre (5) derart gewählt sind, dass die Mantelflächen benachbarter Isolierrohre (5) einander berühren.

4. Gasisolierte Leitung (1) nach Anspruch 3, dadurch gekennzeichnet, dass mindestens 8 und höchstens 20 Isolierrohre (5) vorgesehen sind.

5. Gasisolierte Leitung (1) nach Anspruch 1, dadurch gekennzeichnet, dass der erste Isolierkörper schraubenförmig gewunden ausgebildet ist.

6. Gasisolierte Leitung (1) nach Anspruch 5, dadurch gekennzeichnet, dass der erste Isolierkörper von einem um den Stromleiter (4) gewundenen Isolierrohr (5'') gebildet ist.

7. Gasisolierte Leitung (1) nach Anspruch 6, dadurch gekennzeichnet, dass das Isolierrohr (5'') an seinen beiden Enden abgeflacht ausgebildet ist und eine Abschlussnaht (6) aufweist, welche im wesentlichen parallel zu einer Äquipotentialfläche des bei Betrieb der gasisolierten Leitung (1) herrschenden elektrischen Feldes geführt ist.
